# EUROPÄISCHE PATENTSCHRIFT

(11) **EP 1 463 174 B1**
(45) Veröffentlichungstag und Bekanntmachung des Hinweises auf die Patenterteilung: **10.03.2010**
(21) Anmeldenummer: 03028392.3
(22) Anmeldetag: 11.12.2003
(51) Int. Cl.: H02B 13/035

(54) **Metallgekapselte gasisolierte Schaltanlage**
Metal-clad gas-insulated switchgear
Appareillage de commutation blindé métallique à isolement gazeux

(30) Priorität: 28.03.2003 DE 10314458
(43) Veröffentlichungstag der Anmeldung: 29.09.2004
(73) Patentinhaber: AREVA T&D SA, 92084 Paris La Defense (FR)
(72) Erfinder: Starck, Thierry, 93105 Tegernheim (DE); Heinzelmann, Werner, 93051 Regensburg (DE)
(74) Vertreter: Dreiss

(56) Entgegenhaltungen:
- EP-A- 1 107 408
- US-A- 5 003 427
- PATENT ABSTRACTS OF JAPAN Bd. 0181, Nr. 09 (E-1513), 22. Februar 1994 (1994-02-22) & JP 05 304704 A (MITSUBISHI ELECTRIC CORP), 16. November 1993 (1993-11-16)

## Beschreibung

Die Erfindung betrifft eine metallgekapselte gasisolierte Schaltanlage insbesondere für die Mittelspannungstechnik, mit einem Sammelschienenraum zur Aufnahme einer Sammelschiene und mit einem Leistungsschalterraum zur Aufnahme eines Leistungsschalters.

Eine derartige Schaltanlage ist aus der DE 100 41 315 A1 bekannt. Dort ist ein Sammelschienenraum in einem oberen Bereich der Schaltanlage angeordnet. Davon getrennt ist ein Leistungsschalterraum in einem unteren Bereich angeordnet. Die beiden Behälter bzw. deren elektrische Bauteile sind über Modulkupplungen miteinander verbunden.

Wenn es erforderlich ist, die beschriebene Schaltanlage andersartig aufzubauen, wenn beispielsweise der Leistungsschalterraum mit einem andersartigen Kabelanschluss versehen werden muss, oder wenn die beschriebene Schaltanlage mit einer Doppelsammelschiene versehen werden muss, so können die in der DE 100 41 315 A1 beschriebenen Behälter für den Sammelschienenraum und den Leistungsschalterraum nicht mehr verwendet werden. Dies bringt den Nachteil mit sich, dass für unterschiedliche Anwendungen auch unterschiedliche Behälter vorgehalten werden müssen.

Aufgabe der Erfindung ist es, eine Schaltanlage zu schaffen, die ohne größeren Aufwand für unterschiedliche Anwendungen eingesetzt werden kann.

Diese Aufgabe wird bei einer Schaltanlage der eingangs genannten Art erfindungsgemäß dadurch gelöst, dass ein gasdichter Grundbehälter vorgesehen ist, in dem der Leistungsschalterraum enthalten ist, und dass der Grundbehälter mit einer dem Leistungsschalterraum zugeordneten Montage- und Kabelabgangsöffnung versehen ist, die mit einer Platte oder mit unterschiedlichen Anbauten gasdicht verschließbar ist.

Der Grundbehälter ist also im Bereich des Leistungsschalterraums mit einer Öffnung versehen. Diese Öffnung ist jedoch nicht nur zu Montagezwecken vorgesehen, sondern es ist erfindungsgemäß möglich, diese Öffnung mit unterschiedlichen Anbauten zu verschließen. Mit diesen unterschiedlichen Anbauten kann die Schaltanlage an unterschiedliche Anwendungen angepasst werden.

Damit ist es möglich, allein durch die Verwendung des jeweiligen Anbaus die erfindungsgemäße Schaltanlage für den jeweils erwünschten Anwendungsfall herzurichten. Die Verwendung eines unterschiedlichen Grundbehälters ist jedoch nicht erforderlich. Der erfindungsgemäße Grundbehälter kann somit für unterschiedliche Anwendungsfälle benutzt werden.

Diese Möglichkeit, einen einzigen Grundbehälter für verschiedene Anwendungen zu verwenden, bringt eine wesentliche Kostenreduktion im Hinblick auf verminderte Herstellungskosten, verminderte Lagerhaltungskosten usw. mit sich.

Bei einer vorteilhaften Ausgestaltung der Erfindung ist die Montage- und Kabelabgangsöffnung mit einem Außenkonus-Abgangssystem oder einem Innenkonus-Abgangssystem gasdicht verschließbar. Damit ist es möglich, je nach Anwendungsfall ein Außenkonus- oder ein Innenkonus-Abgangssystem zu verwenden. Dabei kann derselbe Grundbehälter verwendet werden.

Bei einer anderen vorteilhaften Ausgestaltung der Erfindung ist die Montage- und Kabelabgangsöffnung mit einem zweiten Sammelschienenraum gasdicht verschließbar. Damit ist es möglich, mit demselben Grundbehälter ohne weiteren Aufwand eine Doppelsammelschiene zu realisieren.

Bei einer anderen vorteilhaften Ausgestaltung der Erfindung ist die Montage- und Kabelabgangsöffnung mit Anbauten für Kabelanschlussdurchführungen, Stromwandler, Spannungswandler, Lichtbogensensoren, Kabelprüfbuchsen oder dergleichen gasdicht verschließbar. Damit ist es möglich, nahezu beliebige Anbauten zur Anwendung zu bringen, und zwar unter Verwendung desselben Grundbehälters.

Besonders vorteilhaft ist es, wenn die Montage- und Kabelabgangsöffnung an der Unterseite des Leistungsschalterraums angeordnet ist. Insbesondere die Abgangskabel der Schaltanlage können auf diese Weise besonders einfach von dem verwendeten Abgangssystem beispielsweise zu einem im Boden verlegten Kabelkanal geführt werden.

Bei einer vorteilhaften Weiterbildung der Erfindung enthält der Grundbehälter den Sammelschienenraum, und der Sammelschienenraum und der Leistungsschalterraum sind von einer mit Durchführungen versehenen Wand gasdicht voneinander getrennt. Auf diese Weise wird eine besonders kompakte und platzsparende Bauweise des Sammelschienenraums und des Leistungsschalterraums erreicht. Weiterhin wird durch den gemeinsamen Grundbehälter für den Sammelschienenraum und den Leistungsschalterraum eine weitere Kostenreduktion erreicht.

Besonders vorteilhaft ist es, wenn der Sammelschienenraum oberhalb des Leistungsschalterraums angeordnet ist.

Bei einer vorteilhaften Weiterbildung der Erfindung ist der Grundbehälter mit einer dem Sammelschienenraum zugeordneten Montageöffnung versehen, die mit einer Platte oder mit unterschiedlichen Anbauten gasdicht verschließbar ist. Der Grundbehälter ist also im Bereich des Sammelschienenraums mit einer Öffnung versehen. Diese Öffnung ist jedoch nicht nur zu Montagezwecken vorgesehen, sondern es ist erfindungsgemäß möglich, diese Öffnung mit unterschiedlichen Anbauten zu verschließen. Mit diesen unterschiedlichen Anbauten kann die Schaltanlage an unterschiedliche Anwendungen angepasst werden. Damit ist es möglich, allein durch die Verwendung des jeweiligen Anbaus die erfindungsgemäße Schaltanlage für den jeweils erwünschten Anwendungsfall herzurichten. Die Verwendung eines unterschiedlichen Grundbehälters ist jedoch nicht erforderlich.

Bei einer vorteilhaften Ausgestaltung der Erfindung ist die Montageöffnung mit Anbauten für Sammelschienen-Stromwandler, Sammelschienen-Spannungswandler, Sammelschienen-Erder oder dergleichen verschließbar. Damit ist es möglich, nahezu beliebige Anbauten zur Anwendung zu bringen, und zwar unter Verwendung desselben Grundbehälters.

Besonders zweckmäßig ist es, wenn die Montageöffnung auf der Oberseite des Sammelschienenraums angeordnet ist. Damit kann eine einfache Montage insbesondere der Sammelschienen durchgeführt werden.

Bei einer vorteilhaften Weiterbildung der Erfindung ist der Grundbehälter mit einer dem Leistungsschalterraum zugeordneten weiteren Öffnung versehen, die mit einer Platte oder mit unterschiedlichen Anbauten gasdicht verschließbar ist. Erfindungsgemäß ist es damit möglich, diese weitere Öffnung mit weiteren unterschiedlichen Anbauten zu verschließen. Mit diesen unterschiedlichen Anbauten kann die Schaltanlage an unterschiedliche Anwendungen angepasst werden. Damit ist es möglich, allein durch die Verwendung des jeweiligen Anbaus die erfindungsgemäße Schaltanlage für den jeweils erwünschten Anwendungsfall herzurichten. Die Verwendung eines unterschiedlichen Grundbehälters ist jedoch nicht erforderlich.

Bei einer vorteilhaften Ausgestaltung der Erfindung ist die weitere Öffnung mit einem zweiten Sammelschienenraum gasdicht verschließbar. Damit ist es möglich, mit demselben Grundbehälter ohne weiteren Aufwand eine Doppelsammelschiene zu realisieren.

Bei einer anderen vorteilhaften Ausgestaltung der Erfindung ist die weitere Öffnung mit einem Außenkonus-Abgangssystem oder einem Innenkonus-Abgangssystem gasdicht verschließbar. Damit ist es möglich, je nach Anwendungsfall ein Außenkonus- oder ein Innenkonus-Abgangssystem zu verwenden. Dabei kann derselbe Grundbehälter verwendet werden.

Besonders vorteilhaft ist es, wenn die weitere Öffnung auf der Rückseite des Leistungsschalterraums angeordnet ist. Damit sind die zusätzlichen Anbauten besonders einfach von einem Durchgang hinter der Schaltanlage erreichbar.

Weiterhin ist es vorteilhaft, wenn der zweite Sammelschienenraum von einem Behälter und einer Platte gebildet wird, die gasdicht mit dem Grundbehälter verbunden sind. Ein weiterer Vorteil entsteht, wenn das Außenkonus-Abgangssystem oder das Innenkonus-Abgangssystem eine Platte oder eine Wanne aufweist, die gasdicht mit dem Grundbehälter verbunden ist, und die ein Anschlussteil oder eine Steckbuchse sowie gegebenenfalls einen Stromwandler aufnimmt.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

Figur 1a zeigt eine schematische Frontansicht eines Ausführungsbeispiels einer erfindungsgemäßen metallgekapselten gasisolierten Schaltanlage mit Einfachsammelschiene und Außenkonuskabelanschluss,
Figur 1b zeigt eine schematische Seitenansicht der Schaltanlage der Figur 1a,
Figur 2 zeigt eine schematische Seitenansicht einer Abwandlung der Schaltanlage der Figuren 1a und 1b mit Innenkonuskabelanschluss,
Figur 3a zeigt eine schematische Frontansicht eines Ausführungsbeispiels einer erfindungsgemäßen metallgekapselten gasisolierten Schaltanlage mit Doppelsammelschiene und Außenkonuskabelanschluss,
Figur 3b zeigt eine schematische Seitenansicht der Schaltanlage der Figur 3a,
Figur 4 zeigt eine schematische Seitenansicht einer Abwandlung der Schaltanlage der Figuren 3a und 3b mit Einfachsammelschiene und Innenkonuskabelanschluss, und
Figur 5 zeigt eine schematische Seitenansicht einer Abwandlung der Schaltanlage der Figur 4 mit Doppelsammelschiene und Innenkonuskabelanschluss.

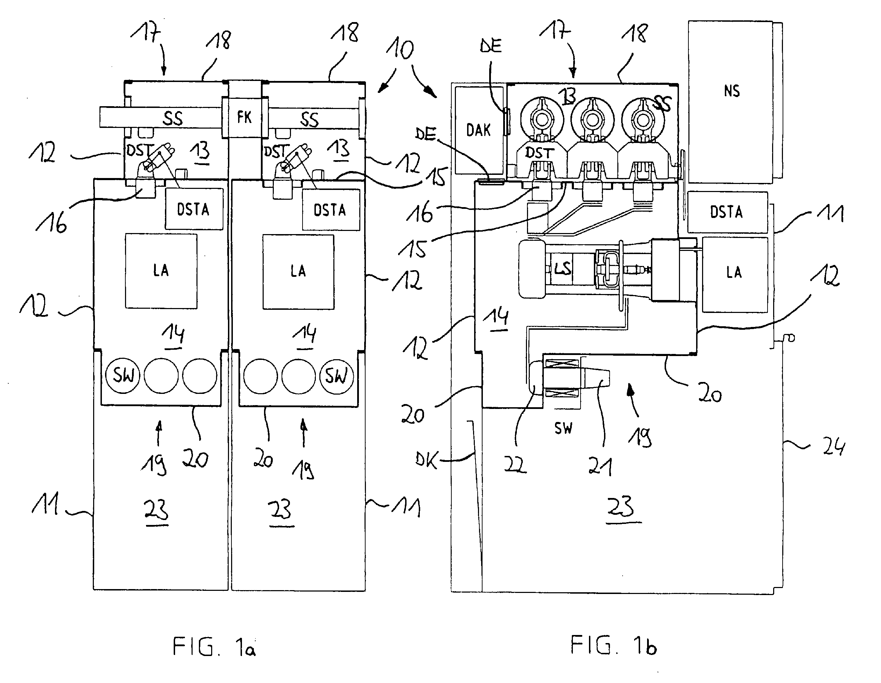

In den Figuren 1a und 1b ist eine metallgekapselte gasisolierte Schaltanlage 10 dargestellt, die insbesondere im Bereich der Mittelspannungstechnik zum Einsatz kommen kann. In der Schaltanlage 10 sind unter anderem ein dreiphasiges Sammelschienensystem mit zugehörigen Leistungsschaltersystemen untergebracht, die zur Umschaltung von elektrischen Strömen bzw. Spannungen vorgesehen sind.

Gemäß der Frontansicht der Figur 1a weist die Schaltanlage 10 zwei Schaltfelder 11 auf, die im wesentlichen identisch aufgebaut und nebeneinander angeordnet sind. Wie noch beschrieben werden wird, sind die beiden Schaltfelder 11 miteinander gekoppelt. Es versteht sich, dass auch noch weitere Schaltfelder 11 vorhanden sein können.

Jedes Schaltfeld 11 weist einen Grundbehälter 12 auf, der mit einem Sammelschienenraum 13 und einem Leistungsschalterraum 14 versehen ist. Der Sammelschienenraum 13 und der Leistungsschalterraum 14 sind im montierten Zustand jeweils für sich gasdicht gekapselt und damit hermetisch voneinander getrennt. Im Betrieb sind der Sammelschienenraum 13 und der Leistungsschalterraum 14 mit einem Isoliergas gefüllt.

In dem Sammelschienenraum 13 sind Sammelschienen SS sowie Dreistellungstrenner DST für die drei Phasen des jeweiligen Schaltfelds 11 untergebracht. Die Sammelschienen SS sind gemäß der Figur 1a etwa horizontal ausgerichtet und gemäß der Figur 1b, von der Frontseite aus gesehen, in einer etwa horizontalen Ebene hintereinander angeordnet. Die Dreistellungstrenner DST sind den Sammelschienen zugeordnet und ebenfalls hintereinander angeordnet. Die Drehebene der Dreistellungstrenner DST ist damit etwa parallel zur Frontseite der Schaltanlage 10.

Die Sammelschienen SS der beiden benachbart angeordneten Schaltfelder 11 sind über in Luft geführte Feldkupplungen FK elektrisch miteinander verbunden. Hierzu ist es möglich, wie dies auch aus der Figur 1a hervorgeht, dass die Breite des Sammelschienenraums 13 kleiner ist als die Breite des Leistungsschalterraums 14. In dem damit freien Bereich können die Feldkupplungen FK angeordnet sein. Die Verbindung mit Hilfe der Feldkupplungen FK kann beispielsweise entsprechend der EP 1 111 748 erfolgen.

In dem Leistungsschalterraum 14 sind Leistungsschalter LS und deren elektrische Zuleitungen für die drei Phasen untergebracht. Gemäß der Figur 1b sind die Leistungsschalter LS etwa horizontal ausgerichtet und, aus einer Seitenansicht gesehen, in einer etwa horizontalen Ebene hintereinander angeordnet.

Der Sammelschienenraum 13 ist oberhalb des Leistungsschalterraums 14 angeordnet. Die beiden Räume 13, 14 sind durch eine Wand 15 gasdicht voneinander getrennt.

In der Wand 15 sind Durchführungen 16 enthalten, über die elektrische Zuleitungen von dem Sammelschienenraum 13 zu dem Leistungsschalterraum 14 geführt sind. Die Durchführungen 16 sind gasdicht und fest mit der Wand 15 verbunden.

Die in dem Sammelschieneraum 13 untergebrachten Dreistellungstrenner DST sind derart ausgebildet und angeordnet, dass jeweils eine direkte Verbindung zwischen einem Kontakt der zugehörigen Durchführung 16 und einem Gegenkontakt der Sammelschiene SS möglich ist. Dies ist insbesondere aus der Figur 1a ersichtlich.

Die Wand 15 kann fest in dem Grundbehälter 12 vorhanden, z.B. eingeschweißt sein. Alternativ ist es möglich, dass die Wand 15 lösbar innerhalb des Grundbehälters 12 befestigt ist, z.B. mittels Schrauben und zugehörigen Dichtungen. In letzterem Fall können unterschiedliche Wände 15 zur Realisierung unterschiedlicher Durchführungen 16 verwendet werden, so dass derselbe Grundbehälter 12 bei unterschiedlichen Anwendungsfällen zum Einsatz kommen kann.

Der Grundbehälter 12 ist an der Oberseite des Sammelschienenraums 13 mit einer Montageöffnung 17 versehen. In den Figuren 1a und 1b ist die Montageöffnung 17 mit einer Platte 18 verschlossen. Die Platte 18 ist z.B. mittels Schrauben lösbar ausgebildet und weist Dichtungen für einen gasdichten Abschluss des Sammelschienenraums 13 im montierten Zustand auf.

Bei abgenommener Platte 18 kann über die Montageöffnung 17 insbesondere die Montage der Sammelschienen SS und der Dreistellungstrenner DST innerhalb des Sammelschienenraums 13 erfolgen. In den Figuren 1a und 1b entspricht die Montageöffnung 17 der gesamten Oberseite des Grundbehälters 12. Es versteht sich, dass die Montageöffnung 17 auch kleiner sein kann.

Anstelle der Platte 18 ist es möglich, die Montageöffnung 17 mit Hilfe von unterschiedlichen Sammelschienen-Anbauten gasdicht zu verschließen. Dabei kann es sich um Sammelschienen-Stromwandler, Sammelschienen-Spannungswandler, Sammelschienen-Erder oder dergleichen handeln. Damit kann derselbe Grundbehälter 12 für unterschiedliche Anwendungsfälle verwendet werden.

Der Grundbehälter 12 ist an der Unterseite des Leistungsschalterraums 14 mit einer Montage- und Kabelabgangsöffnung 19 versehen. In den Figuren 1a und 1b ist diese Öffnung 19 mit einem Außenkonus-Abgangssystem 20 verschlossen. Das Abgangssystem 20 weist unter anderem eine Platte oder Wanne auf, ist z.B. mittels Schrauben lösbar ausgebildet und weist Dichtungen für einen gasdichten Abschluss des Leistungsschalterraums 14 im montierten Zustand auf.

Bei abgenommenem Abgangssystem 20 kann über die Öffnung 19 insbesondere die Montage des Leistungsschalters LS innerhalb des Leistungsschalterraums 14 erfolgen. In den Figuren 1a und 1b entspricht die Montage- und Kabelabgangsöffnung 19 der gesamten Unterseite des Grundbehälters 12. Es versteht sich, dass die Öffnung 19 auch kleiner sein kann.

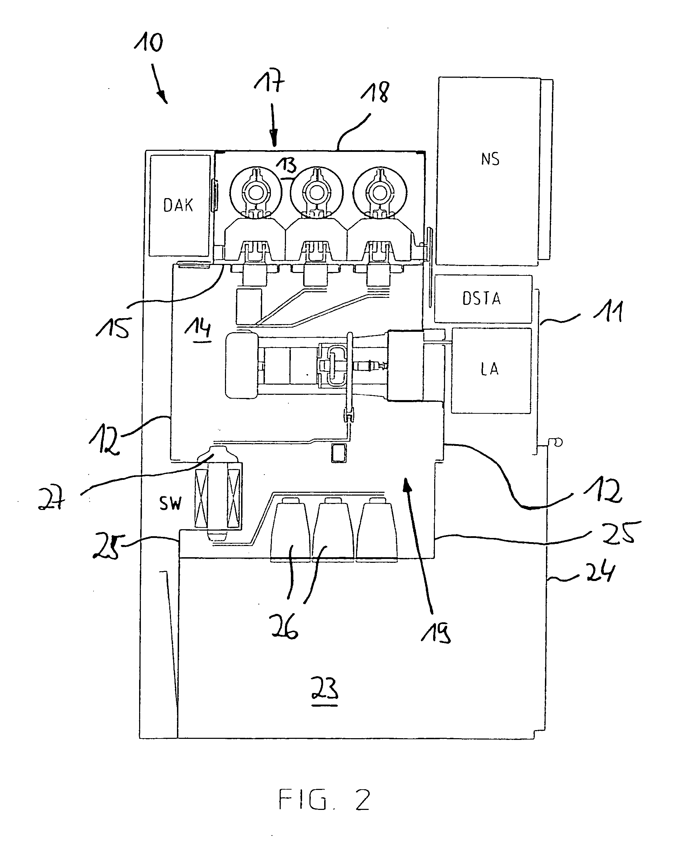

Anstelle des Außenkonus-Abgangssystems 20 ist es möglich, die Montage- und Kabelabgangsöffnung 19 mit Hilfe von unterschiedlichen Anbauten gasdicht zu verschließen. Dabei kann es sich um Innenkonus-Abgangssysteme, sonstige Kabelanschlussdurchführungen, Stromwandler, Spannungswandler, Lichtbogensensoren, Kabelprüfbuchsen oder dergleichen handeln. Dies wird beispielhaft anhand der Figur 2 erläutert werden. Damit kann derselbe Grundbehälter 12 für unterschiedliche Anwendungsfälle verwendet werden.

Das Außenkonus-Abgangssystem 20 weist Kabeldurchführungen 22 mit zugehörigen Stromwandlern SW für die drei Phasen auf. Die Kabeldurchführungen 22 sind über Zuleitungen mit den Leistungsschaltern LS verbunden. Die Kabeldurchführungen 22 sind gasdicht an dem Außenkonus-Abgangssystem 20 angebracht. Die Kabeldurchführungen 22 sind an ihren freien Enden mit Anschlussteilen 21 nach dem Außenkonussystem versehen. Die Stromwandler SW sind als Ringkernwandler ausgebildet und auf zylindrische Bereiche der Kabeldurchführungen 22 aufgeschoben. Die Stromwandler SW und die Anschlussteile 21 befinden sich damit außerhalb des Grundbehälters 12 und somit in Luft.

Gemäß der Figur 1b sind die Stromwandler SW und die Anschlussteile 21 etwa horizontal ausgerichtet. Gemäß der Figur 1a sind die Stromwandler SW, von der Frontseite aus gesehen, in einer etwa horizontalen Ebene nebeneinander angeordnet.

Unterhalb des Grundbehälters 12 und damit unterhalb des Leistungsschalterraums 14 weist jedes Schaltfeld 11 einen Kabelanschluss- oder Abgangsraum 23 auf. In diesem Abgangsraum 23 befinden sich die vorgenannten Stromwandler SW und Anschlussteile 21. Der Abgangsraum 23 ist nicht gasdicht verschlossen und ist über eine steckbare Blende oder Tür 24 von der Frontseite des jeweiligen Schaltfelds 11 zugänglich.

Der Abgangsraum 23 dient dazu, den jeweils verwendeten Anbauten, mit denen die Montage- und Kabelabgangsöffnung 19 verschlossen ist, also beispielsweise dem Außenkonus-Abgangssystem 20, den erforderlichen Raum für die jeweils vorhandenen Bauteile zur Verfügung zu stellen. Ebenfalls sind in dem Abgangsraum 23 die Abgangskabel des jeweiligen Schaltfelds 11 geführt, beispielsweise zu einem im Boden verlegten Kabelkanal. Weiterhin können in dem Abgangsraum 23 auch noch weitere elektrische Bauteile des jeweiligen Schaltfelds 11 untergebracht werden.

Der Grundbehälter 12 ist an nicht-dargestellten Trageinrichtungen des jeweiligen Schaltfelds 11 befestigt. An diesen Trageinrichtungen sind auch die Tür 24 an der Frontseite, weitere Abdeckplatten der Frontseite sowie Rückwand-Abdeckplatten oder dergleichen angebracht.

Weiterhin ist in jedem Schaltfeld 11 ein Dreistellungstrennerantrieb DSTA, ein Leistungsschalterantrieb LA, ein Niederspannungsschrank NS sowie gegebenenfalls ein Druckentlastungskanal DAK vorhanden.

Der Dreistellungstrennerantrieb DSTA und der Leistungsschalterantrieb LA sind außerhalb des Grundbehälters 12 im Bereich der Frontseite des jeweiligen Schaltfelds 11 und, von der Frontseite aus gesehen, etwa vor dem Leistungsschalterraum 14 des Grundbehälters 12 angeordnet. Über gasdichte Durchführungen sind der Dreistellungstrennerantrieb DSTA und der Leistungsschalterantrieb LA mit den Dreistellungstrennern DST und den Leistungsschaltern LS mechanisch gekoppelt.

Der Niederspannungsschrank NS ist außerhalb des Grundbehälters 12 im Bereich der Frontseite des jeweiligen Schaltfelds 11 und, von der Frontseite aus gesehen, etwa vor dem Sammelschienenraum 13 des Grundbehälters angeordnet. In dem Niederspannungsschrank NS sind unter anderem elektrische Schaltungen oder Geräte zur Steuerung des jeweiligen Schaltfelds 11 bzw. der Schaltanlage 10 untergebracht.

Der Druckentlastungskanal DAK ist außerhalb des Grundbehälters 12 im Bereich der Rückseite des jeweiligen Schaltfelds 11 und, von der Frontseite aus gesehen, etwa hinter dem Sammelschienenraum 13 des Grundbehälters 12 angeordnet. Dabei ist es möglich, dass, von der Frontseite aus gesehen, der Sammelschienenraum 13 eine geringere Tiefe aufweist als der Leistungsschalterraum 14, und dass deshalb der Leistungsschalterraum 14 über den Sammelschienenraum 13 nach hinten übersteht. Dieser überstehende Bereich kann dann von dem Druckentlastungskanal DAK ausgefüllt werden. Der Druckentlastungskanal DAK erstreckt sich über die gesamte Rückseite der vorhandenen Schaltfelder 11 und damit über die gesamte Rückseite der Schaltanlage 10.

Gemäß der Figur 1b weist der Sammelschienenraum 13 eine, von der Frontseite aus gesehen, nach hinten gerichtete Druckentlastungseinrichtung DE auf. Wie ebenfalls der Figur 1b zu entnehmen ist, weist der Leistungsschalterraum 14 eine nach oben gerichtete Druckentlastungseinrichtung DE auf. Über diese Druckentlastungseinrichtungen DE ist der Druckentlastungskanal DAK mit dem Sammelschienenraum 13 und dem Leistungsschalterraum 14 gekoppelt.

Der Abgangsraum 23 weist auf seiner Rückseite eine Druckentlastungsklappe DK auf, die über einen an der Rückseite des Schaltfelds 11 vorhandenen Zwischenraum mit dem Druckentlastungskanal DAK verbunden ist.

Damit ist es möglich, dass im Betrieb der Schaltanlage 10 bei einem Störfall entstehendes heißes Isoliergas über den Druckentlastungskanal DAK aus dem jeweiligen Schaltfeld 11 herausgeführt wird.

In der Figur 2 ist eine Abwandlung der Schaltanlage 10 der Figuren 1a und 1b dargestellt. Übereinstimmende Bauteile sind mit übereinstimmenden Bezugszeichen gekennzeichnet.

Anstelle des Außenkonus-Abgangssystems 20 der Figuren 1a und 1b ist in der Figur 2 ein Innenkonus-Abgangssystem 25 vorgesehen. Das Abgangssystem 25 weist unter anderem eine Platte oder Wanne auf, ist z.B. mittels Schrauben lösbar ausgebildet und weist Dichtungen für einen gasdichten Abschluss des Leistungsschalterraums 14 im montierten Zustand auf.

Das Innenkonus-Abgangssystem 25 weist Steckbuchsen 26 nach dem Innenkonussystem sowie Stromwandler SW für die drei Phasen auf. Weiterhin weist das Abgangssystem 25 Durchführungen 27 auf, die im Bereich einer U-förmigen Ausbildung des Abgangssystems 25 angeordnet sind. Ein zylindrischer Bereich der Durchführungen 27 befindet sich damit außerhalb des Grundbehälters 12. Die Durchführungen 27 sind über Zuleitungen mit den Leistungsschaltern LS und mit den Steckbuchsen 26 verbunden. Die Durchführungen 27 sind gasdicht an dem Abgangssystem 25 angebracht. Die Stromwandler SW sind als Ringkernwandler ausgebildet und auf den zylindrischen Bereich der Durchführungen 27 aufgeschoben. Die Steckbuchsen 26 sind nach unten ausgerichtet und gasdicht an dem Abgangssystem 25 befestigt, so dass die Einstecköffnungen der Steckbuchsen 26 von außen zugänglich sind. Die Stromwandler SW und die Einstecköffnungen der Steckbuchsen 26 befinden sich damit außerhalb des Grundbehälters 12 und somit in Luft.

Gemäß der Figur 2 sind die Stromwandler SW und Steckbuchsen 26 etwa vertikal ausgerichtet. Weiterhin sind die Stromwandler SW, von der Frontseite aus gesehen, in einer etwa vertikalen Ebene nebeneinander angeordnet. Die Steckbuchsen 26 sind, von der Frontseite aus gesehen, in einer etwa vertikalen Ebene hintereinander angeordnet.

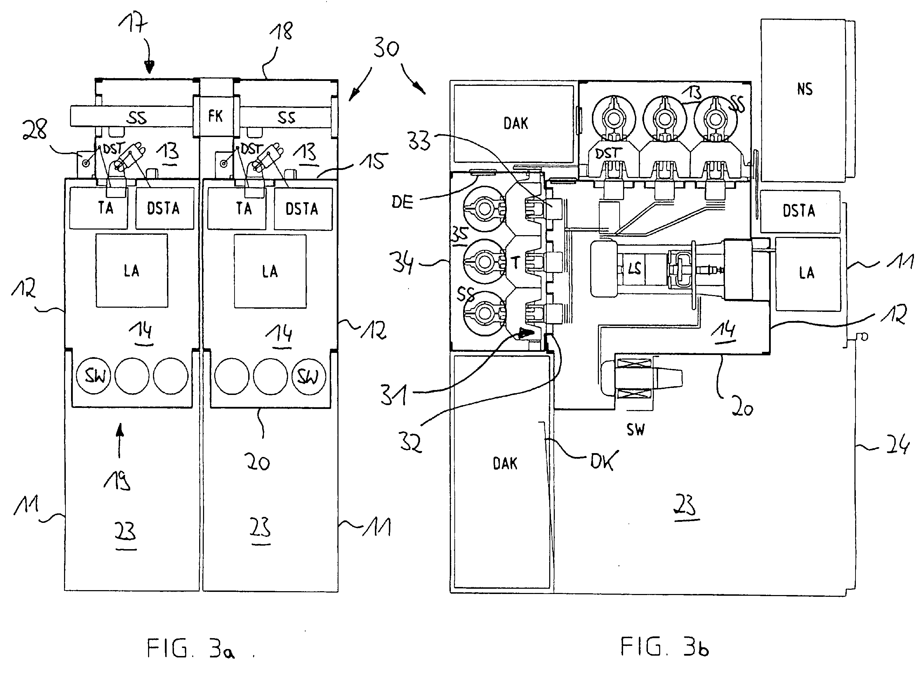

In den Figuren 3a und 3b ist eine metallgekapselte gasisolierte Schaltanlage 30 mit beispielhaft zwei Schaltfeldern dargestellt, die der Schaltanlage 10 der Figuren 1a und 1b ähnlich ist. Übereinstimmende Bauteile sind mit übereinstimmenden Bezugszeichen gekennzeichnet.

Im Unterschied zu der Schaltanlage 10 der Figuren 1a und 1b, die eine Einfachsammelschiene aufweist, ist bei der Schaltanlage 30 der Figuren 3a und 3b eine Doppelsammelschiene vorgesehen.

Bei der Schaltanlage 30 der Figuren 3a und 3b weist der Grundbehälter 12 der einzelnen Schaltfelder 11 eine weitere Öffnung 31 auf. Diese Öffnung 31 ist, von der Frontseite aus gesehen, auf der Rückseite des Grundbehälters 12 angeordnet. Die Öffnung 31 ist dabei nur in dem Leistungsschalterraum 14 vorhanden, nicht aber in dem Sammelschienenraum 13. Die Öffnung 31 erstreckt sich über die gesamte Rückseite des Leistungsschalterraums 14, kann aber auch kleiner sein.

Die Öffnung 31 ist mit einem wannenförmigen Behälter 32 verschlossen, dessen Boden die Öffnung 31 verschließt. Im Boden des Behälters 32 sind Durchführungen 33 enthalten, über die elektrische Zuleitungen von dem Sammelschienenraum 13 herausgeführt sind. Die Durchführungen 33 sind gasdicht und fest mit dem Behälter 32 verbunden. Der Behälter 32 ist an seiner dem Boden gegenüberliegenden Seite mit einer Platte 34 verschlossen, die gasdicht und fest mit dem Behälter 32 verbunden ist. Der Behälter 32 bildet einen zweiten gasdichten Sammelschienenraum 35, der im Betrieb der Schaltanlage 30 mit Isoliergas gefüllt ist. Bei abgenommener Platte 34 können die in dem Behälter 32 untergebrachten Bauteile montiert werden bzw. sind auf diese Weise zugänglich.

In dem zweiten Sammelschienenraum 35 sind weitere Sammelschienen SS sowie Trenner T für die drei Phasen untergebracht. Die Sammelschienen SS sind dabei, von der Frontseite aus gesehen, etwa horizontal ausgerichtet und in einer etwa vertikalen Ebene übereinander angeordnet. Die Trenner T sind den jeweiligen Sammelschienen SS zugeordnet und dort angeordnet. Anstelle der Trenner T können auch Dreistellungstrenner vorhanden sein.

Die Trenner T sind mit Trennerantrieben TA gekoppelt, die außerhalb des Grundbehälters 12 im Bereich der Frontseite des jeweiligen Schaltfelds 11 neben den Dreistellungstrennerantrieben DSTA und etwa vor dem Leistungsschalterraum 14 angeordnet sind.

Wie bereits erwähnt wurde und wie der Figur 3b zu entnehmen ist, weist, von der Frontseite ausgesehen, der Sammelschienenraum 13 einer geringere Breite auf als der darunter liegende Leistungsschalterraum 14. Wie ebenfalls bereits erwähnt wurde, kann dieser freie Bereich zur Verbindung der benachbarten Schaltfelder 11 über die Feldkupplungen FK herangezogen werden.

In dem vorgenannten freien Bereich sind weiterhin Betätigungseinrichtungen 28 vorgesehen, die zur Kopplung der Trennerantriebe TA mit den in dem weiteren Sammelschienenraum 35 angeordneten Trennern T erforderlich sind.

Ähnlich wie im Zusammenhang mit dem ersten Sammelschienenraum 13 bereits beschrieben, sind die Sammelschienen SS und die Trenner T des zweiten Sammelschienenraums 35 über die bereits erwähnten Durchführungen 33 mit den Leistungsschaltern LS des Leistungsschalterraums 14 verbunden.

Insbesondere ist es möglich, dass, von der Frontseite aus gesehen, die Tiefe der Montageöffnung 17 und damit des ersten Sammelschienenraums 13 etwa der Höhe der Öffnung 31 und damit des zweiten Sammelschienenraums 35 entspricht. In diesem Fall kann der zweite Sammelschienenraum 35 etwa mit denselben Abmessungen ausgebildet werden wie der erste Sammelschienenraum 13. In den beiden Sammelschienenräumen 13, 35 können dann gleichartige Sammelschienen SS und Dreistellungstrenner DST sowie gleichartige Platten 18, 34 verwendet werden.

Es versteht sich, dass bei unterschiedlichen Abmessungen des zweiten Sammelschienenraums 35 auch unterschiedliche Sammelschienen SS und unterschiedliche Dreistellungstrenner DST zur Anwendung kommen können.

Von der Frontseite aus gesehen, befindet sich hinter dem ersten Sammelschienenraum 13 und oberhalb des zweiten Sammelschienenraums 35 der Schaltanlage 30 ein erster Druckentlastungskanal DAK, der mit beiden Sammelschienenräumen 13, 35 gekoppelt ist. Zu diesem Zweck ist der weitere Sammelschienenraum 35 mit einer nach oben gerichteten Druckentlastungseinrichtung DE versehen.

Zusätzlich kann dieser erste Druckentlastungskanal DAK mit dem Leistungsschalterraum 14 gekoppelt sein. Von der Frontseite aus gesehen, kann unterhalb des zweiten Sammelschienenraums 35 und hinter dem Abgangsraum 23 ein zweiter Druckentlastungskanal DAK vorgesehen sein, der über die bereits erwähnte Druckentlastungsklappe DK mit dem Abgangsraum 23 gekoppelt sein kann. Im Betrieb der Schaltanlage 30 bei einem Störfall entstehendes heißes Isoliergas kann somit über den ersten und den zweiten Druckentlastungskanal DAK aus dem jeweiligen Schaltfeld 11 herausgeführt werden.

Wird die weitere Öffnung 31 des Grundbehälters 12 der Schaltanlage 30 mit einer Platte oder dergleichen gasdicht verschlossen, so entsteht der Grundbehälter 12 der Schaltanlage 10. Die Platte kann dabei z.B. mittels Schrauben lösbar ausgebildet sein. Durch die Platte kann somit von der Schaltanlage 30 der Figuren 3a und 3b ohne weiteres zu der Schaltanlage 10 der Figuren 1a und 1b übergegangen werden.

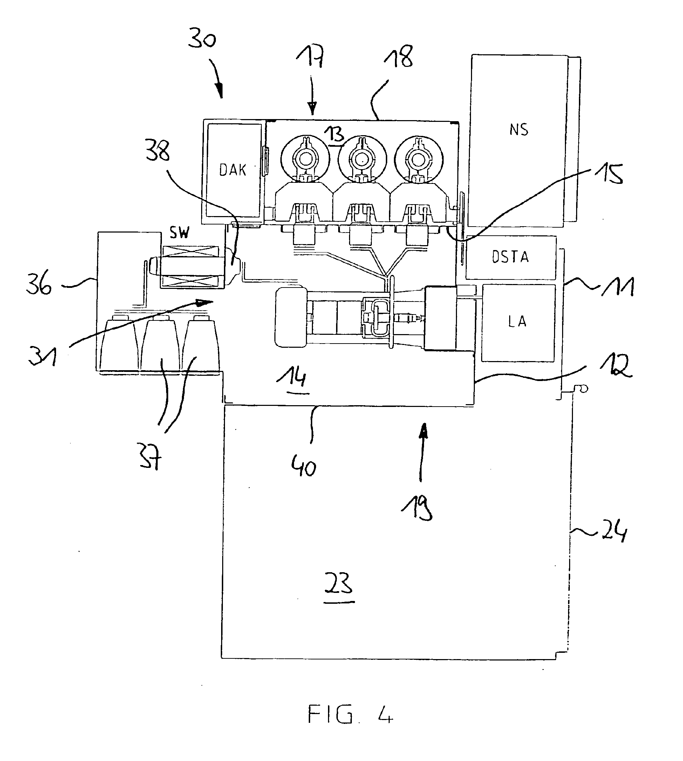

In der Figur 4 ist eine Abwandlung der Schaltanlage 30 der Figuren 3a und 3b dargestellt. Übereinstimmende Bauteile sind mit übereinstimmenden Bezugszeichen gekennzeichnet.

Das Außenkonus-Abgangssystem 20 und der zweite Sammelschienenraum 35 der Figuren 3a und 3b sind in der Figur 4 durch ein Innenkonus-Abgangssystem 36 ersetzt, durch das die Öffnung 31 verschlossen ist. Die Schaltanlage 30 der Figur 4 weist damit, im Unterschied zu den Figuren 3a und 3b, nur eine Einfachsammelschiene auf.

Das Innenkonus-Abgangssystem 36 weist unter anderem eine Platte oder Wanne auf, ist z.B. mittels Schrauben lösbar ausgebildet und weist Dichtungen für einen gasdichten Abschluss des Leistungsschalterraums 14 im montierten Zustand auf.

Das Innenkonus-Abgangssystem 36 weist weiterhin Steckbuchsen 37 nach dem Innenkonussystem sowie Stromwandler SW für die drei Phasen auf. Weiterhin weist das Abgangssystem 25 Durchführungen 38 auf, die im Bereich einer U-förmigen Ausbildung des Abgangssystems 36 angeordnet sind. Ein zylindrischer Bereich der Durchführungen 38 befindet sich damit außerhalb des Grundbehälters 12. Die Durchführungen 38 sind über Zuleitungen mit den Leistungsschaltern LS und mit den Steckbuchsen 37 verbunden. Die Durchführungen 38 sind gasdicht an dem Abgangssystem 36 angebracht. Die Stromwandler SW sind als Ringkernwandler ausgebildet und auf den zylindrischen Bereich der Durchführungen 38 aufgeschoben. Die Steckbuchsen 37 sind nach unten ausgerichtet und gasdicht an dem Abgangssystem 36 befestigt, so dass die Einstecköffnungen der Steckbuchsen 37 von außen zugänglich sind. Die Stromwandler SW und die Einstecköffnungen der Steckbuchsen 37 befinden sich damit außerhalb des Grundbehälters 12 und somit in Luft.

Gemäß der Figur 4 sind die Stromwandler SW etwa horizontal und die Steckbuchsen 37 etwa vertikal ausgerichtet. Weiterhin sind die Stromwandler SW, von der Frontseite aus gesehen, in einer etwa horizontalen Ebene nebeneinander angeordnet. Die Steckbuchsen 37 sind, von der Frontseite aus gesehen, in einer etwa vertikalen Ebene hintereinander angeordnet.

Die Montage- und Kabelabgangsöffnung 19 ist in der Figur 4 durch eine z.B. mittels Schrauben befestigte Platte 40 gasdicht verschlossen. Der Druckentlastungskanal DAK der Figur 4 entspricht im wesentlichen demjenigen der Figuren 1b bzw. 2.

Das Innenkonus-Abgangssystem 36 ist gemäß der Figur 4, von der Frontseite aus gesehen, hinter dem Grundbehälter und damit auf der Rückseite des jeweiligen Schaltfelds 11 angeordnet. Die Steckbuchsen 37 dieses Innenkonus-Abgangssystems 36 befinden sich damit in einer, im Vergleich zu den Figuren 1a, 1b, 2, 3a und 3b, erhöhten Position. Ein Anschluss von Kabeln an diese Steckbuchsen 37 kann damit in einfacher Weise von einem hinter den Schaltfeldern 11 vorgesehenen Durchgang aus erfolgen. Auf einen im Boden verlegten Kabelkanal kann gegebenenfalls verzichtet werden.

Alternativ ist es möglich, das Innenkonus-Abgangssystem 36 um 180 Grad zu drehen. Damit sind die Steckbuchsen 37 nach oben ausgerichtet. Die Abgangskabel können dann von oben in die Steckbuchsen 37 eingesteckt werden.

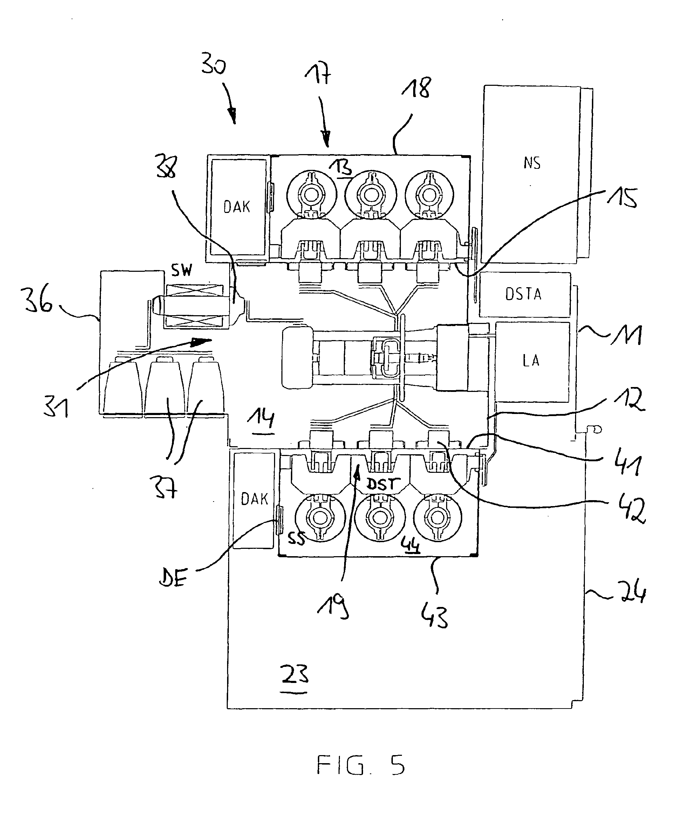

In der Figur 5 ist eine Abwandlung der Schaltanlage 30 der Figur 4 dargestellt. Übereinstimmende Bauteile sind mit übereinstimmenden Bezugszeichen gekennzeichnet.

Im Unterschied zu der Figur 4 weist die Schaltanlage der Figur 5 eine Doppelsammelschiene auf.

Hierzu ist die Montage- und Kabelabgangsöffnung 19 mit einem wannenförmigen Behälter 41 verschlossen, dessen Boden die Öffnung 19 verschließt. Im Boden des Behälters 41 sind Durchführungen 42 enthalten, über die elektrische Zuleitungen von dem Leistungsschalterraum 13 herausgeführt sind. Die Durchführungen 42 sind gasdicht und fest mit dem Behälter 41 verbunden. Der Behälter 41 ist an seiner dem Boden gegenüberliegenden Seite mit einer Platte 43 verschlossen, die gasdicht und fest mit dem Behälter 41 verbunden ist. Der Behälter 41 bildet zusammen mit der Platte 43 einen zweiten gasdichten Sammelschienenraum 44, der im Betrieb der Schaltanlage 30 mit Isoliergas gefüllt ist. Bei abgenommener Platte 43 können die in dem Behälter 41 untergebrachten Bauteile montiert werden bzw. sind auf diese Weise zugänglich.

In dem zweiten Sammelschienenraum 44 sind weitere Sammelschienen SS und weitere Dreistellungstrenner DST oder Trenner für die drei Phasen untergebracht. Die Sammelschienen SS sind dabei, von der Frontseite aus gesehen, etwa horizontal ausgerichtet und in einer etwa horizontalen Ebene hintereinander angeordnet. Die Dreistellungstrenner DST sind den jeweiligen Sammelschienen SS zugeordnet und dort angeordnet.

Ähnlich wie im Zusammenhang mit dem ersten Sammelschienenraum 13 bereits beschrieben, sind die Sammelschienen SS und die Dreistellungstrenner DST des zweiten Sammelschienenraums 44 über die bereits erwähnten Durchführungen 42 mit den Leistungsschaltern LS des Leistungsschalterraums 14 verbunden.

Insbesondere ist es möglich, dass der zweite Sammelschienenraum 44 etwa mit denselben Abmessungen ausgebildet ist wie der erste Sammelschienenraum 13. In den beiden Sammelschienenräumen 13, 44 können dann gleichartige Sammelschienen SS und Dreistellungstrenner DST verwendet werden. Es versteht sich, dass bei unterschiedlichen Abmessungen des zweiten Sammelschienenraums 44 auch unterschiedliche Sammelschienen SS und unterschiedliche Dreistellungstrenner DST zur Anwendung kommen können.

Von der Frontseite aus gesehen, befindet sich hinter dem ersten Sammelschienenraum 13 und oberhalb des Innenkonus-Abgangssystems 36 ein erster Druckentlastungskanal DAK, der mit dem ersten Sammelschienenraum 13 gekoppelt ist. Zusätzlich ist dieser erste Druckentlastungskanal DAK mit dem Leistungsschalterraum 14 gekoppelt. Von der Frontseite aus gesehen, kann hinter dem zweiten Sammelschienenraum 44 und unterhalb des Leistungsschalterraums 14 ein zweiter Druckentlastungskanal DAK vorgesehen sein, der mit dem zweiten Sammelschienenraum 44 über eine Druckentlastungseinrichtung DE gekoppelt sein kann. Im Betrieb der Schaltanlage 30 bei einem Störfall entstehendes heißes Isoliergas kann somit über den ersten und den zweiten Druckentlastungskanal DAK aus dem jeweiligen Schaltfeld 11 herausgeführt werden.

## Patentansprüche

1. Metallgekapselte gasisolierte Schaltanlage (10, 30) insbesondere für die Mittelspannungstechnik, mit einem Sammelschienenraum (13) zur Aufnahme einer Sammelschiene (SS), und mit einem Leistungsschalterraum (14) zur Aufnahme eines Leistungsschalters (LS), und mit einem Kabelanschluss- oder Abgangsraum (23), **dadurch gekennzeichnet, dass** ein gasdichter Grundbehälter (12) vorgesehen ist, in dem der Sammelschienenraum (13) und der Leistungsschalterraum (14) enthalten sind, dass der Kabelanschluss- oder Abgangsraum (23) unterhalb des Grundbehälters (12) angeordnet ist, dass der Grundbehälter (12) mit einer an seiner Unterseite angeordneten und dem Leistungsschalterraum (14) zugeordneten Montage- oder Kabelabgangsöffnung (19) versehen ist, die mit einer lösbaren Platte (40) oder mit lösbaren unterschiedlichen Anbauten gasdicht verschließbar ist, und dass der Kabelanschluss- oder Abgangsraum (23) dazu vorgesehen ist, den jeweils verwendeten Anbauten, mit denen die Montage- oder Kabelabgangsöffnung (19) verschließbar ist, den erforderlichen Raum für die jeweils vorhandenen Bauteile zur Verfügung zu stellen.

2. Schaltanlage (10, 30) nach Anspruch 1, **dadurch gekennzeichnet, dass** die Montage- und Kabelabgangsöffnung (19) mit einem Außenkonus-Abgangssystem (20) oder einem Innenkonus-Abgangssystem (25) gasdicht verschließbar ist.

3. Schaltanlage (10, 30) nach Anspruch 1, **dadurch gekennzeichnet, dass** die Montage- und Kabelabgangsöffnung (19) mit einem zweiten Sammelschienenraum (44) gasdicht verschließbar ist.

4. Schaltanlage (10, 30) nach Anspruch 1, **dadurch gekennzeichnet, dass** die Montage- und Kabelabgangsöffnung (19) mit Anbauten für Kabelanschlussdurchführungen, Stromwandler, Spannungswandler, Lichtbogensensoren, Kabelprüfbuchsen oder dergleichen gasdicht verschließbar ist.

5. Schaltanlage (10, 30) nach einem der Ansprüche 1 bis 4, **dadurch gekennzeichnet, dass** die Montage- und Kabelabgangsöffnung (19) an der Unterseite des Leistungsschalterraums (14) angeordnet ist.

6. Schaltanlage (10, 30) nach einem der Ansprüche 1 bis 5, **dadurch gekennzeichnet, dass** der Grundbehälter (12) den Sammelschienenraum (13) enthält, und dass der Sammelschienenraum (13) und der Leistungsschalterraum (14) von einer mit Durchführungen (16) versehenen Wand (15) gasdicht voneinander getrennt sind.

7. Schaltanlage (10, 30) nach Anspruch 6, **dadurch gekennzeichnet, dass** der Sammelschienenraum (13) oberhalb des Leistungsschalterraums (14) angeordnet ist.

8. Schaltanlage (10, 30) nach einem der Ansprüche 6 oder 7, **dadurch gekennzeichnet, dass** der Grundbehälter (12) mit einer dem Sammelschienenraum (13) zugeordneten Montageöffnung (17) versehen ist, die mit einer Platte (18) oder mit unterschiedlichen Anbauten gasdicht verschließbar ist.

9. Schaltanlage (10, 30) nach Anspruch 8, **dadurch gekennzeichnet, dass** die Montageöffnung (17) mit Anbauten für Sammelschienen-Stromwandler, Sammelschienen-Spannungswandler, Sammelschienen-Erder oder dergleichen verschließbar ist.

10. Schaltanlage (10, 30) nach einem der Ansprüche 8 oder 9, **dadurch gekennzeichnet, dass** die Montageöffnung (17) auf der Oberseite des Sammelschienenraums (13) angeordnet ist.

11. Schaltanlage (30) nach einem der Ansprüche 1 bis 10, **dadurch gekennzeichnet, dass** der Grundbehälter (12) mit einer dem Leistungsschalterraum (14) zugeordneten weiteren Öffnung (31) versehen ist, die mit einer Platte oder mit unterschiedlichen Anbauten gasdicht verschließbar ist.

12. Schaltanlage (30) nach Anspruch 11, **dadurch gekennzeichnet, dass** die weitere Öffnung (31) mit einem zweiten Sammelschienenraum (35) gasdicht verschließbar ist.

13. Schaltanlage (30) nach Anspruch 12, **dadurch gekennzeichnet, dass** die Abmessungen des zweiten Sammelschienenraums (35) und des ersten Sammelschienenraums (13) etwa gleich sind.

14. Schaltanlage (30) nach Anspruch 11, **dadurch gekennzeichnet, dass** die weitere Öffnung (31) mit einem Außenkonus-Abgangssystem oder einem Innenkonus-Abgangssystem (36) gasdicht verschließbar ist.

15. Schaltanlage (10) nach einem der Ansprüche 11 bis 14, **dadurch gekennzeichnet, dass** die weitere Öffnung (31) auf der Rückseite des Leistungsschalterraums (14) angeordnet ist.

16. Schaltanlage (10, 30) nach Anspruch 3 oder nach Anspruch 12, **dadurch gekennzeichnet, dass** der zweite Sammelschienenraum (35, 44) von einem Behälter (32, 41) und einer Platte (34, 43) gebildet wird, die gasdicht mit dem Grundbehälter (12) verbunden sind.

17. Schaltanlage (10, 30) nach Anspruch 2 oder nach Anspruch 14, **dadurch gekennzeichnet, dass** das Außenkonus-Abgangssystem (20) oder das Innenkonus-Abgangssystem (25, 36) eine Platte oder eine Wanne aufweist, die gasdicht mit dem Grundbehälter (12) verbunden ist, und die ein Anschlussteil (21) oder eine Steckbuchse (26, 37) sowie gegebenenfalls einen Stromwandler (SW) aufnimmt.

18. Schaltanlage (10, 30) nach einem der vorstehenden Ansprüche, **dadurch gekennzeichnet, dass**, von der Frontseite aus gesehen, der Sammelschienenraum (13) eine geringere Tiefe aufweist als der Leistungsschalterraum (14) und der Leistungsschalterraum (14) deshalb nach hinten über den Sammelschienenraum (13) übersteht, und dass, von der Frontseite aus gesehen, ein Druckentlastungskanal (DAK) hinter dem Sammelschienenraum (13) und oberhalb des Leistungsschalterraums (14) in demjenigen Bereich angeordnet ist, in dem der Leistungsschalterraum (14) über den Sammelschienenraum (13) übersteht.

19. Schaltanlage (10, 30) nach einem der vorstehenden Ansprüche, **dadurch gekennzeichnet, dass**, von der Frontseite aus gesehen, der Sammelschienenraum (13) eine geringere Breite aufweist als der Leistungsschalterraum (14) und der Leistungsschalterraum (14) deshalb auf einer Seite über den Sammelschienenraum (13) übersteht, und dass, von der Frontseite aus gesehen, weitere Bauteile, beispielsweise Feldkupplungen (FK) und/oder Betätigungseinrichtungen (28) für Trenner (T) und dergleichen, neben dem Sammelschienenraum (13) und oberhalb des Leistungsschalterraums (14) in demjenigen Bereich angeordnet sind, in dem der Leistungsschalterraum (14) über den Sammelschienenraum (13) übersteht.

## Claims

1. Metal encapsulated gas-insulated switchgear unit (10, 30), in particular for medium voltage technology, comprising a busbar compartment (13) for accommodating a busbar (SS), and a circuit-breaker compartment (14) for accommodating a circuit breaker (LS), and a cable terminal or outgoing cable compartment (23), **characterised in that** a gas-tight base container (12) is provided, in which the busbar compartment (13) and the circuit-breaker compartment (14) are contained, that the cable terminal or outgoing cable compartment (23) is arranged beneath the base container (12), that the base container (12) is provided on the underside thereof with an assembly or outgoing cable aperture (19) which is associated with the circuit-breaker compartment (14) and which is closable in gas-tight manner with a releasable plate (40) or with different releasable built-on accessories, and that the cable terminal or outgoing cable compartment (23) is provided in order to make available the space required for the respective built-on accessories used, with which the assembly or outgoing cable aperture (19) can be closed for the respective components provided.

2. Switchgear unit (10, 30) according to claim 1, **characterised in that** the assembly and outgoing cable aperture (19) can be closed in gas-tight manner with an external taper outgoing system (20) or an internal taper outgoing system (25).

3. Switchgear unit (10, 30) according to claim 1, **characterised in that** the assembly and outgoing cable aperture (19) is closable in gas-tight manner with a second busbar compartment (44).

4. Switchgear unit (10, 30) according to claim 1, **characterised in that** the assembly and outgoing cable aperture (19) is closable in gas-tight manner with built-on accessories for cable connection passages, current transformers, voltage transformers, arc sensors, cable test sockets or the like.

5. Switchgear unit (10, 30) according to one of the claims 1 to 4, **characterised in that** the assembly and outgoing cable aperture (19) is arranged on the underside of the circuit-breaker compartment (14).

6. Switchgear unit (10, 30) according to one of the claims 1 to 5, **characterised in that** the base container (12) contains the busbar compartment (13) and that the busbar compartment (13) and the circuit-breaker compartment (14) are separated from one another in gas-tight manner by a wall (15) provided with passages (16).

7. Switchgear unit (10, 30) according to claim 6, **characterised in that** the busbar compartment (13) is arranged above the circuit-breaker compartment (14).

8. Switchgear unit (10, 30) according to one of the claims 6 or 7, **characterised in that** the base container (12) is provided with an assembly aperture (17) associated with the busbar compartment (13), said assembly aperture being closable in gas-tight manner with a plate (18) or different built-on accessories.

9. Switchgear unit (10, 30) according to claim 8, **characterised in that** the assembly aperture (17) is closable with built-on accessories for busbar current transformers, busbar voltage transformers, busbar earth switches or the like.

10. Switchgear unit (10, 30) according to one of the claims 8 or 9, **characterised in that** the assembly aperture (17) is arranged on the upper side of the busbar compartment (13).

11. Switchgear unit (30) according to one of the claims 1 to 10, **characterised in that** the base container (12) is provided with a further aperture (31) associated with the circuit-breaker compartment (14), said further aperture (31) being closable in gas-tight manner with a plate or with different built-on accessories.

12. Switchgear unit (30) according to claim 11, **characterised in that** the further aperture (31) is closable in gas-tight manner with a second busbar compartment (35).

13. Switchgear unit (30) according to claim 12, **characterised in that** the dimensions of the second busbar compartment (35) and of the first busbar compartment (13) are approximately the same.

14. Switchgear unit (30) according to claim 11, **characterised in that** the further aperture (31) is closable in gas-tight manner with an external taper outgoing system or an internal taper outgoing system (36).

15. Switchgear unit (10) according to one of the claims 11 to 14, **characterised in that** the further aperture (31) is arranged on the rear side of the circuit-breaker compartment (14).

16. Switchgear unit (10, 30) according to claim 3 or claim 12, **characterised in that** the second busbar compartment (35, 44) is formed by a container (32, 41) and a plate (34, 43) which are connected in gas-tight manner to the base container (12).

17. Switchgear unit (10, 30) according to claim 2 or claim 14, **characterised in that** the external taper outgoing system (20) or the internal taper outgoing system (25, 36) has a plate or a trough which is connected in gas-tight manner to the base container (12) and which accommodates a connection member (21) or a socket contact (26, 37) and possibly a current transformer (SW).

18. Switchgear unit (10, 30) according to one of the preceding claims, **characterised in that**, seen from the front side, the busbar compartment (13) has a smaller depth than the contact-breaker compartment (14) and the contact-breaker compartment (14) therefore extends rearward beyond the busbar compartment (13), and that, seen from the front side, a pressure relief channel (DAK) is arranged behind the busbar compartment (13) and above the contact-breaker compartment (14) in the region in which the contact-breaker compartment (14) extends beyond the busbar compartment (13).

19. Switchgear unit (10, 30) according to one of the preceding claims, **characterised in that**, seen from the front side, the busbar compartment (13) has a smaller width than the contact-breaker compartment (14) and the contact-breaker compartment (14) therefore extends beyond the busbar compartment (13) on one side, and that, seen from the front side, further components, for example, field couplings (FK) and/or actuating devices (28) for isolators (T) and the like are arranged adjacent the busbar compartment (13) and above the contact-breaker compartment (14) in the region in which the contact-breaker compartment (14) extends beyond the busbar compartment (13).

## Revendications

1. Installation de distribution (10, 30) isolée au gaz et à enveloppe métallique, en particulier pour la technique moyenne tension, comportant un compartiment de barres omnibus (13) destiné à recevoir une barre omnibus (SS), un compartiment de disjoncteur (14) destiné à recevoir un disjoncteur (LS) et un compartiment de départ ou de raccord de câble (23), **caractérisée en ce qu'**il est prévu un réservoir de base (12) étanche aux gaz contenant le compartiment de barres omnibus (13) et le compartiment de disjoncteur (14), **en ce que** le compartiment de départ ou de raccord de câble (23) est agencé sous le réservoir de base (12), **en ce que** le récipient de base (12) est muni sur sa face inférieure d'une ouverture de montage ou de départ de câble (19) associée au compartiment de disjoncteur (14), laquelle ouverture peut être fermée de façon étanche aux gaz par une plaque amovible (40) ou par divers éléments amovibles, et **en ce que** le compartiment de départ ou de raccord de câble (23) est prévu pour mettre à disposition des différents éléments utilisés, avec lesquels l'ouverture de montage ou de départ de câble (19) peut se fermer, l'espace nécessaire aux différents éléments.

2. Installation de distribution (10, 30) selon la revendication 1, **caractérisée en ce que** l'ouverture de montage et de départ de câble (19) peut être fermée de façon étanche aux gaz par un système de départ à cône mâle (20) ou par un système de départ à cône femelle (25).

3. Installation de distribution (10, 30) selon la revendication 1, **caractérisée en ce que** l'ouverture de montage et de départ de câble (19) peut être fermée de façon étanche aux gaz par un deuxième compartiment de barres omnibus (44).

4. Installation de distribution (10, 30) selon la revendication 1, **caractérisée en ce que** l'ouverture de montage et de départ de câble (19) peut être fermée de façon étanche aux gaz par des éléments pour passages de raccords de câble, par des transformateurs de courant, transformateurs de tension, détecteurs d'arc électrique, douilles d'essai de câble ou analogues.

5. Installation de distribution (10, 30) selon l'une des revendications 1 à 4, **caractérisée en ce que** l'ouverture de montage et de départ de câble (19) est agencée sur le dessous du compartiment de disjoncteur (14).

6. Installation de distribution (10, 30) selon l'une des revendications 1 à 5, **caractérisée en ce que** le réservoir de base (12) contient le compartiment de barres omnibus (13) et **en ce que** le compartiment de barres omnibus (13) et le compartiment de disjoncteur (14) sont séparés l'un de l'autre de façon étanche aux gaz par une paroi (15) munie de traversées (16).

7. Installation de distribution (10, 30) selon la revendication 6, **caractérisée en ce que** le compartiment de barres omnibus (13) est agencé au-dessus du compartiment de disjoncteur (14).

8. Installation de distribution (10, 30) selon l'une des revendications 6 ou 7, **caractérisée en ce que** le réservoir de base (12) est muni d'une ouverture de montage (17) associée au compartiment de barres omnibus (13), laquelle ouverture peut être fermée de façon étanche aux gaz par une plaque (18) ou par divers éléments.

9. Installation de distribution (10, 30) selon la revendication 8, **caractérisée en ce que** l'ouverture de montage (17) peut être fermée par des éléments pour transformateurs de courant de barres omnibus, transformateurs de tension de barres omnibus, prises de terre de barres omnibus ou analogues.

10. Installation de distribution (10, 30) selon l'une des revendications 8 ou 9, **caractérisée en ce que** l'ouverture de montage (17) est agencée sur le dessus du compartiment de barres omnibus (13).

11. Installation de distribution (30) selon l'une des revendications 1 à 10, **caractérisée en ce que** le réservoir de base (12) est muni d'une autre ouverture (31) associée au compartiment de disjoncteur (14), laquelle ouverture peut être fermée de façon étanche aux gaz par une plaque ou divers éléments.

12. Installation de distribution (30) selon la revendication 11, **caractérisée en ce que** l'autre ouverture (31) peut être fermée de façon étanche aux gaz par un deuxième compartiment de barres omnibus (35).

13. Installation de distribution (30) selon la revendication 12, **caractérisée en ce que** les dimensions du deuxième compartiment de barres omnibus (35) et du premier compartiment de barres omnibus (13) sont à peu près identiques.

14. Installation de distribution (30) selon la revendication 11, **caractérisée en ce que** l'autre ouverture (31) peut être fermée de façon étanche aux gaz par un système de départ à cône mâle ou un système de départ à cône femelle (36).

15. Installation de distribution (10) selon l'une des revendications 11 à 14, **caractérisée en ce que** l'autre ouverture (31) est agencée à l'arrière du compartiment de disjoncteur (14).

16. Installation de distribution (10, 30) selon la revendication 3 ou 12, **caractérisée en ce que** le deuxième compartiment de barres omnibus (35, 44) est formé d'un réservoir (32, 41) et d'une plaque (34, 43) qui sont reliés au réservoir de base (12) de façon étanche aux gaz.

17. Installation de distribution (10, 30) selon la revendication 2 ou 14, **caractérisée en ce que** le système de départ à cône mâle (20) ou le système de départ à cône femelle (25, 36) présente une plaque ou une paroi qui est reliée au réservoir de base (12) de façon étanche aux gaz et qui reçoit une pièce de raccordement (21) ou une fiche femelle (26, 37) ainsi que, le cas échéant, un transformateur de courant (SW).

18. Installation de distribution (10, 30) selon l'une des revendications précédentes, **caractérisée en ce que**, vu de face, le compartiment de barres omnibus (13) présente une profondeur inférieure au compartiment de disjoncteur (14), le compartiment de disjoncteur (14) faisant par conséquent saillie vers l'arrière au-dessus du compartiment de barres omnibus (13), et **en ce que**, vu de face, il est agencé un canal de décompression (DAK) derrière le compartiment de barres omnibus (13) et au-dessus du compartiment de disjoncteur (14) dans la zone correspondante, le compartiment de disjoncteur (14) faisant ainsi saillie au-dessus du compartiment de barres omnibus (13).

19. Installation de distribution (10, 30) selon l'une des revendications précédentes, **caractérisée en ce que**, vu de face, le compartiment de barres omnibus (13) présente une largeur inférieure au compartiment de disjoncteur (14), le compartiment de disjoncteur (14) faisant par conséquent saillie d'un côté par dessus le compartiment de barres omnibus (13), et **en ce que**, vu de face, d'autres éléments comme, par exemple, des couplages champ (FK) et/ou des dispositifs de commande (28) pour sectionneurs (T) et analogues, sont agencés à côté du compartiment de barres omnibus (13) et au-dessus du compartiment de disjoncteur (14) dans la zone correspondante, le compartiment de disjoncteur (14) faisant ainsi saillie au-dessus du compartiment de barres omnibus (13).
